Europäisches Patentamt

**European Patent Office**

Office européen des brevets

(11) Veröffentlichungsnummer : **0 162 407**
**B1**

(12) **EUROPÄISCHE PATENTSCHRIFT**

(45) Veröffentlichungstag der Patentschrift :
**11.01.89**

(21) Anmeldenummer : **85105938.6**

(22) Anmeldetag : **14.05.85**

(51) Int. Cl.⁴ : **G 11 B 20/18**, G 11 B   5/596,
G 11 B 23/36

(54) Verfahren und Anordnung zur Fehlersignalermittlung in einem Magnetplattenspeicher und Testmagnetplatte dafür.

(30) Priorität : **18.05.84 DE 3418526**

(43) Veröffentlichungstag der Anmeldung :
**27.11.85 Patentblatt 85/48**

(45) Bekanntmachung des Hinweises auf die Patenterteilung : **11.01.89 Patentblatt 89/02**

(84) Benannte Vertragsstaaten :
**BE DE FR GB NL**

(56) Entgegenhaltungen :
**EP--A-- 0 035 915**
**EP--A-- 0 106 661**
**DE--A-- 2 554 083**
**DE--A-- 3 117 911**
**DE--A-- 3 335 560**
**IBM TECHNICAL DISCLOSURE BULLETIN, Band 26,**
**Nr. 7A, Dezember 1983, Seiten 3343-3348, New York,**
**US; H.J. BAASCH et al."Azimuth and position detec-**
**tion method for a magnetic read/write head"**

(73) Patentinhaber : **BASF Aktiengesellschaft**
**Carl-Bosch-Strasse 38**
**D-6700 Ludwigshafen (DE)**

(72) Erfinder : **Kraus, Gerold**
**Eisenbahnstrasse 17**
**D-7630 Lahr (DE)**
Erfinder : **Huber, Walter**
**Krongutstrasse 11**
**D-7602 Oberkirch (DE)**
Erfinder : **Hack, Joachim**
**Pfarrer-Friedrich-Strasse 34**
**D-6700 Ludwigshafen (DE)**
Erfinder : **Schulze-Berge, Klaus**
**Stuhlbruderhofstrasse 13**
**D-6704 Mutterstadt (DE)**
Erfinder : **Sold, Roland**
**Rheingoenheimer Strasse 1**
**D-6704 Mutterstadt (DE)**

**Beschreibung**

Die Erfindung betrifft ein Verfahren und eine Anordnung zur Fehlersignalermittlung in einem Magnetplatten-Laufwerk mit einem Schrittmotor-Positioniersystem mittels einer Testmagnetplatte, die eine Mehrzahl von Testspuren im nutzbaren Aufzeichnungsbereich der Magnetplatte aufweist, wobei die Testsignale der Testspuren aus von der Spurmitte abwechselnd nach jeder Seite aufgezeichneten Lagepulsen mit gleicher Amplitudengröße und die Lagepulse in Gruppen einteilenden Orientierungspulsen mit im Vergleich zu den Lagepulsen anderer Amplitudengröße bestehen, und wobei die Testsignale mittels eines Magnetkopfes gelesen und Abweichungen der Lesesignale von ihrer Sollage und Sollamplitude festgestellt werden und wobei Mittelwerte der Abweichungen gebildet werden, sowie eine Testmagnetplatte zur Durchführung der Verfahrensmaßnahmen.

Die Güte des Schreib- und/oder Lesevorgangs in einem Magnetplattenspeicher wird durch die Einstellung und Zuordnung der Aufzeichnungsplatte und des Magnetkopfes während ihrer Relativ-Bewegung derselben bestimmt. Insbesondere bei flexiblen Aufzeichnungsträgern, z. B. FlexyDisk" und dazugehörigen Geräten zum Schreiben und/oder Lesen ist es wichtig, das Gerät, insbesondere den Magnetkopf und/oder die Kopfeinstelleinheit relativ zum Aufzeichnungsträger zu verstellen. Dieser Einstellvorgang wird als Spurlageeinstellung bezeichnet. Zu diesem Zweck werden sogenannte Einstell- oder CE-Platten verwendet, die Kontrollmarkierungen tragen. Die Kontrollmarkierungen sind z. B. gemäß DE-OS 25 54 083 sich von der Spurmitte aus abwechselnd nach jeder Seite erstreckende magnetische Flußwechsel, die auf einer einzigen oder höchstens wenigen Testspuren ausdrücklich nur im Mittelbereich der Platte aufgezeichnet sind. Diese Kontrollmarkierungen sind Lagepulse die rings um die Testspur vorgesehen sind und die durch in der Amplitude unterschiedliche Orientierungsimpulse in Gruppen eingeteilt sind. Durch die Verwendung von unterschiedlichen Lage- und Orientierungspulsen wird eine bessere Unterscheidbarkeit der Pulse und eine einfache Darstellmöglichkeit auf einem Oszillographen gegeben, worauf der gesamte Umfang der Testspur abbildbar ist und so eine einfache Kopflageprüfung und Kopfjustierung ermöglicht. Eine Berücksichtigung von Motorschrittfehlern ist dabei nicht möglich.

Aus der DE-OS 31 17 911 ist es bekanntgeworden, einen Testkörper zu verwenden, der zumindest teilweise einander benachbarte Abtastspurpaare mit einem positiven bzw. negativen Spurversatz gegenüber einer Normallage einer Abtastspur aufweist. Zum Ausrichten des Abtastkopfes werden die Abtastspuren mit Spurversatz gelegt und sobald ein vorher in der Größe festgelegter Lesefehler auftritt, wird der Mittelwert aus den Lesesignalen des Abtastspurpaares gebildet und zur Nachrichtung des Abtastkopfes benutzt. Es ist darin auch beschrieben, daß bei in zwei nicht benachbart liegenden Abtastspuren auftretenden Fehlern gleicher Größe auch Mittelwertbildung zwischen dem Lesesignal der einen positiven Abtastspur und dem Lesesignal der zweiten negativen Abtastspur ein Signalwert zur Kopfnachrichtung bildbar ist. Ferner ist es daraus bekannt, bei einer maximalen, noch verarbeitbaren Abweichung der ausgelesenen Testsignale den Absolutbetrag des jeweiligen positiven und des jeweiligen negativen Spurversatzes festzuhalten und aus beiden einen den Qualitätswert darstellenden Mittelwert zu bilden.

In jedem Fall wird also ein Mittelwert aus zwei Fehlersignalen gebildet und damit auf die Qualität eines Kopfpositionierungsbereichs geschlossen. Durch die Verwendung besagter Abtastspurpaare ist die doppelte Lesezeit erforderlich gegenüber einer Spurabtastung. Es ist außerdem maximal nur möglich, die Hälfte aller theoretisch möglichen Testspuren unterzubringen. Es ist durch die Verwendung nicht unterscheidbarer gleichgroßer Testsignale in einer Spur nur aufwendig möglich winkellagenabhängige Informationen, z. B. über eine Exzentrizität, zu erfassen. Wenn Spuren für eine Steuerung des Testprogramms freigehalten werden müssen, gehen Informationen über Abweichungen gerade in diesem Spurbereich verloren.

Aus der EP-A 106 661 ist es für eine Testplatte bekannt, verschiedenartige Testsignale zu verwenden, die in Testspuren angeordnet sind, die zwischen Nutzspurbereichen in mehreren verschiedenen Bereichen verteilt sind und in den Bereichen unterschiedliche Anzahlen und Abstände zueinander aufweisen. Es ist daraus auch ferner bekannt über die Spurabweichung für verschiedene Motorphasen eines Schrittmotors zu prüfen, ob eine Radialabweichung von einer Drehungenauigkeit des Schrittmotors herrührt oder ihre Ursache beim Linearpositionierer liegt. Eine Mittelwertbildung über alle Testspuren einer Testplatte zur Positionskorrektur eines Magnetkopfes zu bilden, ist jedoch nicht daraus bekannt.

Die vorliegende Erfindung hat sich die Aufgabe gestellt, ein Verfahren, eine Anordnung und eine Testmagnetplatte zur verbesserten und umfassenderen Fehlersignalermittlung und -auswertung bereitzustellen, wobei die Meß- und Kontrollmöglichkeiten, insbesondere in Hinsicht auf Motorschrittfehler verbessert werden sollen.

Die Aufgabe wird mit den Gegenständen der Patentansprüche 1 bzw. 8 bzw. 6 gelöst.

Damit wird es möglich, gemäß einer gewünschten Genauigkeitsvorgabe, im Maximalfall über die gesamtmögliche Testspurzahl und im Normalfall in Abhängigkeit besonderer Parameter oder in Berücksichtigung besonderer Fehlereinflüsse, die Fehlersignale festzustellen und gegebenenfalls auszuwerten, z. B. zur Qualitätsprüfung, oder gegebenenfalls zur Kopfeinstellung, z. B. in der Geräteproduktion, oder zur Kopfnachsteuerung, z. B. beim Lesebetrieb, oder gegebenenfalls zur rechnerischen

2

Korrektur von Lesesignalen (beim Lesebetrieb des Geräts) zu verwenden.

In den Patentansprüchen werden die Abstände der Testspuren auf den üblichen Abstand der Nutzspuren der Magnetplatten bezogen. Eine wichtige Verfahrensmaßnahme in den Patentansprüchen 1 und 8 wird für Laufwerke mit Schrittmotor-Positioniersystemen darin gesehen, daß Lage, Zahl und Abstände der Testspuren auf der Testplatte so gewählt und abgetastet werden, daß sie mit der Zahl der Motorphasen der Schrittmotore gerade nicht übereinstimmen. Dadurch wird es überraschend gut möglich, auch die bei den einzelnen Schritten des Schrittmotors auftretenden Fehlersignale mitzuerfassen und gerade nicht zu unterdrücken.

Für Laufwerke mit einem 4-Phasen-Schrittmotor-Positioniersystem sollen die Testspuren einen Abstand von drei Nutzspurabständen und entsprechend bei einem 3-Phasen-Schrittmotor-Positioniersystem einen Abstand von vier Nutzspurabständen aufweisen.

Für jedes der Schrittmotor-Positioniersysteme ist damit eine gesonderte Testmagnetplatte erforderlich. Zweckmäßig können auch für Laufwerke mit 3-Phasen- oder 4-Phasen-Schrittmotor-Positioniersystemen die Testspuren einen Abstand von zwei und drei Nutzspurabständen aufweisen, wodurch eine Kombinations-Testmagnetplatte erhalten wird, die dann die Testsignale z. B. in der zweiten, fünften und siebten Spur usw. aufweist. Verfahrensmäßig ist eine entsprechende Abtastung und Auswertung notwendig.

In der Praxis ist es auch vorteilhaft, wenn die Testsignale beginnend mit einer Referenz-Testspur in der Richtung ansteigender oder abfallender Spurnummern seriell gelesen und verarbeitet werden und anschließend die Testsignale der Spuren in Richtung abfallender bzw. ansteigender Spurennummern seriell gelesen und verarbeitet werden, und daß die zwei Richtungs-Mittelwerte zu dem Gesamt-Mittelwert addiert werden, und daß nach dem Ermitteln des Gesamtmittelwerts dieser vom Spur-Mittelwert der Referenz-Testspur subtrahiert und der resultierende Mittelwert entweder zur Kopfpositionskorrektur auf der Referenz-Testspur oder zur direkten Korrektur des Schreib- oder Lesesignals benutzt wird.

Damit ist es möglich, die Hysterese der Kopfpositionierung durch Abtastung in beiden Richtungen in Bezug auf eine gegebene Spur zu erfassen, so daß die Hystereseeinflüsse in den Gesamt-Mittelwert einbezogen werden.

Außerdem wird in Bezug auf die vorhandene Aufzeichnungsfläche ein optimaler Fehlerausgleich erreicht, wenn die Referenzspur entsprechend angeordnet ist.

Eine Test-Magnetplatte für das erfindungsgemäße Verfahren weist die an sich bekannten Testsignale auf, die aus von der Spurmitte abwechselnd nach jeder Seite aufgezeichneten Lagepulsen mit gleicher Amplitudengröße und die Lagepulse in Gruppen einteilenden Orientierungspulsen mit unterscheidbarer Amplitudengröße bestehen, und ist erfindungsgemäß mit einer Vielzahl von derartigen Testspuren versehen, wobei die Testspuren mit im wesentlichen denselben Testsignalen abwechselnd in radialen Positionen aufgezeichnet sind, die den Positionen von in zwei und drei Nutzspurabständen vorgesehenen Nutzspuren entsprechen.

Damit wird eine einfach herstellbare, breit anwendbare sogenannte CE-Disk (CE = Customer Engineer) bereitgestellt, die für 3-Phasen- und 4-Phasen-Schrittmotorpositioniersysteme verwendbar ist. Wenn z. B. eine andere Testplatte mit der maximal möglichen Anzahl von Testspuren mit Testsignalen versehen ist, ist es natürlich auch möglich, beliebige Spurfolgen, z. B. nur jede dritte oder vierte Spur je nach dem gerade verwendeten Schrittmotor für die Fehlersignalerfassung anzusteuern. Damit ergibt sich aber eine sehr breite Verwendbarkeit der Platte für die Geräteprüfung von sehr unterschiedlichen Gerätetypen.

Die erfindungsgemäße Testmagnetplatte kann auch über mindestens einen Teil des Aufzeichnungsbereichs Testspuren mit je drei Nutzspurabständen oder mit je vier Nutzspurabständen aufweisen. Damit wird eine individuelle Testplatte für Geräte mit 4- bzw. 3-Phasen-Schrittmotoren bereitgestellt.

Eine Anordnung zur Durchführung des Verfahrens nach der Erfindung ist gegeben, wenn eine erfindungsgemäße Testmagnetplatte und eine Schaltungsanordnung vorgesehen sind, wobei letztere eine Steuerstufe für die Steuerung des Positioniersystems in einem den Abständen der Testspuren auf der Testmagnetplatte entsprechenden Abtastzyklus enthält und die dem Magnetkopf angeschlossen eine Auswertstufe, eine Mittelwertbildnerstufe und eine Speicherstufe für die Fehlersignale sowie eine Anzeige- und/oder Schreibstufe für den Gesamt-Mittelwert enthält.

Eine solche Schaltungsanordnung ist mit handelsüblichen elektronischen Schaltungselementen wirtschaftlich realisierbar.

Die Anordnung kann dabei eine Testmagnetplatte mit Testspuren im 2- und 3-Nutzspurabstand oder im 3- oder 4-Nutzspurabstand aufweisen bei entsprechendem Abtastzyklus, der durch die Steuerstufe erzeugt ist. In weiterer praktischer Ausgestaltung ist eine Steuerstufe vorgesehen, die das Positioniersystem so steuert, daß das Magnetkopfsystem beginnend von der Referenz-Testspur, die Testspuren in der Richtung ansteigender oder abfallender Spurnummern abtastet und anschließend nach Richtungsumkehrung die Testspuren in abfallender bzw. ansteigender Spurnummer-Richtung abtastet. Damit wird ohne wesentlichen zusätzlichen Schaltungsaufwand die Schaltungsanordnung zur Erfassung der Positionier-Hysterese geeignet.

Eine weitere Ausbildung der Schaltungsanordnung wird darin gesehen, daß eine Steuerstufe vorgesehen ist, die nach Feststellen des Gesamt-Mittelwertes das Magnetkopfsystem über das Positioniersystem auf die Referenz-Testspur steuert und der Spur-Mittelwert mittels der Mittelwertbildnerstufe entweder noch einmal bestimmt oder aus der Speicherstufe entnommen wird und nach anschließender Subtraktion des Gesamt-Mittelwerts vom Spur-Mittelwert der resultierende Mittelwert mittels der Anzeige- oder Schreibstufe angezeigt und/oder zur automatischen Kopfnachstellung bereitgestellt wird.

Dadurch wird eine einfache Einstellung des Magnetkopfsystems per Hand oder direkten Schreib- oder Lesesignalkorrektur in der Speicherstufe oder mittels einer automatischen Kopfverstellvorrichtung möglich.

Weitere Einzelheiten des Verfahrens und der Anordnung sowie der Testmagnetplatte dafür sind der folgenden Beschreibung eines Ausführungsbeispiels, das in der Zeichnung dargestellt ist, entnehmbar.

In der Zeichnung zeigen :

Figur 1  eine Testplatte mit einem schematischen Plattenspeichergerät nach der Erfindung.

Figur 2  geometrische serielle Testmarkierungen einer Testspur oder Platte.

Figur 3  eine Gruppe von Testmarkierungen gemäß Trennungslinien 20, 21 in Figur 2.

Figur 4  die Kurve der gemessenen Abweichungen einer Vielzahl von Testspuren einer Platte.

Figur 5  eine erfindungsgemäße Schaltungsanordnung zur Durchführung des Verfahrens.

Die Platten- und Geräteanordnung 19 besteht im wesentlichen aus einer schematischen Plattenantriebseinheit 16, einer Test-Magnetaufzeichnungsplatte 15, einem Magnetkopfpositioniersystem 11 mit Spindel 12 und Magnetkopf 13. Der Magnetkopf 13 ist im Sinne des Doppelpfeils d auf der Spindel 12 längsverstellbar. Mit 14 ist eine mittlere Kreisspur auf der Platte 15 gekennzeichnet. Mit dem Pfeil a ist eine Drehrichtung der Antriebswelle der Einheit 16 bezeichnet. Der durch die Platte 15 hindurchragende Teil 17 der Antriebswelle ist leicht konisch geformt, um eine leichte Zentrierung der Platte 15 zu ermöglichen.

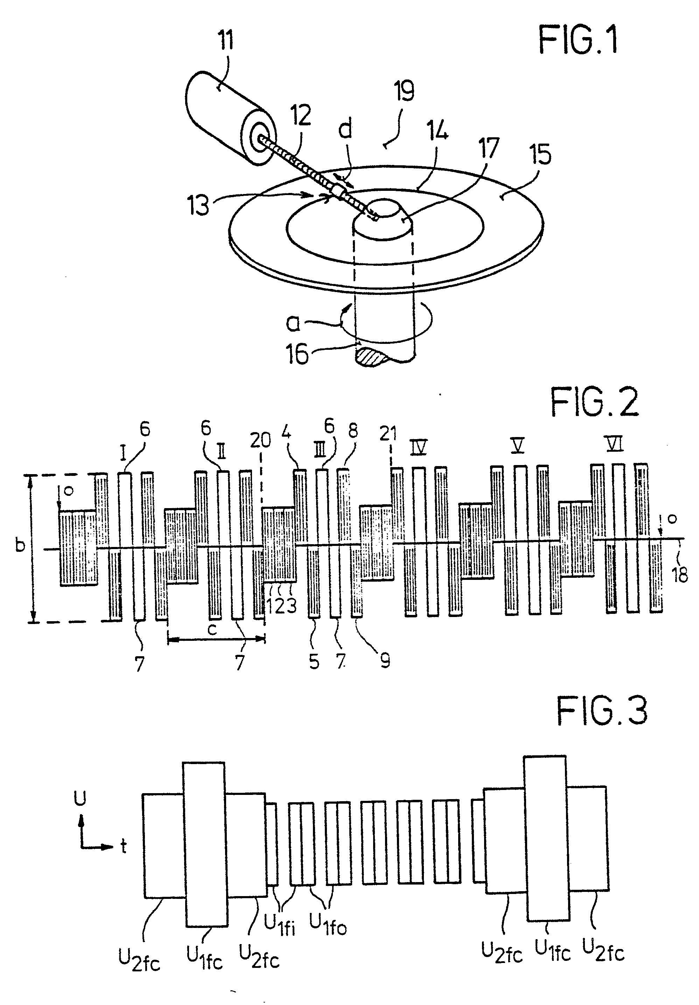

In Figur 2 ist eine Ausführung von geometrisch seriell angeordneten Testmarkierungen dargestellt, die von der Spurmittellinie 18, z. B. der besagten Spur 14, ausgehen. Mit b ist die Spurbreite bezeichnet. Die Testmarkierungen werden aus einer Vielzahl von Magnetflußwechseln gebildet. In Figur 2 sind insgesamt sechs Gruppen I bis VI von Markierungen erkennbar, jede der Gruppen hat die Länge c. Jede Gruppe besteht aus drei geometrisch symmetrisch zur Mittellinie 18 der Spur liegenden Orientierungsmarkierungen oder Orientierungspulse (O-Pulse) 1 bis 3 und sechs Lagemarkierungen oder Lage-Pulsen (L-Pulse) 4, 5 und 8, 9 die geometrisch abwechselnd nach je einer Seite von der Spurmitte 18 liegen. Die Amplituden der O- und L-Pulse sind zweckmäßig gut unterscheidbar ausgebildet gewählt. Dies z. B. ist einfach erreichbar, wenn die O-Pulse 1 bis 3 aus abwechselnd unterschiedlichen Signalfrequenzen z. B. von 2f, 1f, 2f bestehen. Die Frequenz f ist dabei die Aufzeichnungsfrequenz des Datenplattensystems. Beim FlexyDisk System liegt diese Frequenz bei f = 250 kHz bei 360 Umdrehungen pro Minute (Upm). Die L-Pulse haben dann zweckmäßig die einfache Frequenz f.

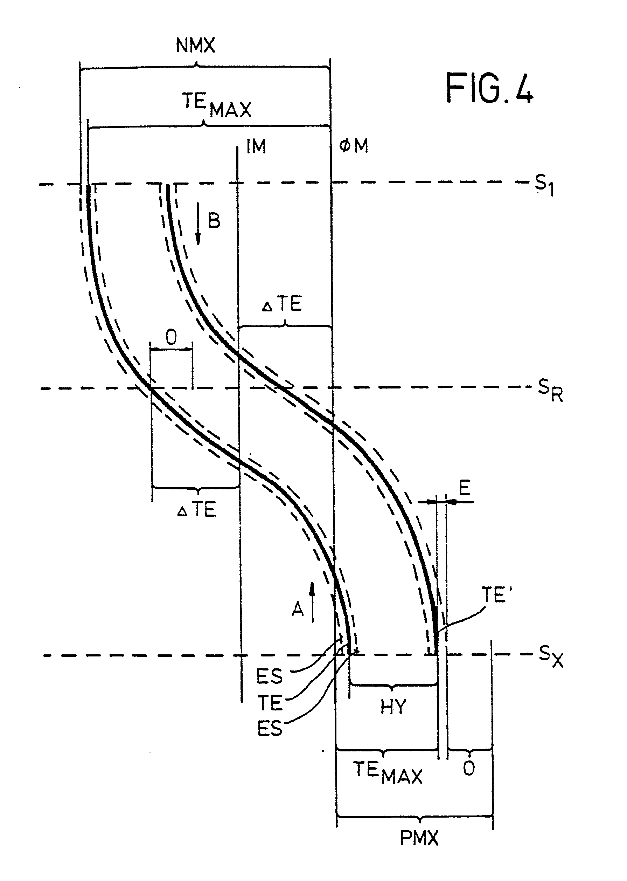

Figur 3 zeigt ein Oszillografenbild der Pulse zwischen den gestrichelten Linien 20 und 21, die die O-Pulse 1 bis 3 und L-Pulse 4, 5 und 8, 9 der Markierungsgruppe II und die Kennmarkierungen 1 bis 3 der Gruppe IV einschließen. Die Azimuth-Pulse 6 und 7 sind in diesem Oszillografenbild nicht dargestellt. Wie angedeutet, ist in y-Richtung die vom Magnetkopf 13 abgetastete Lesespannung U über der Zeit t in x-Richtung abgebildet.

Die O-Pulse 1 bis 3 sind als Lesespannungen U2fc, U1fc und U2fc erkennbar, wobei die Spannung U1fc die größere Amplitude im Vergleich zu den Amplituden U2fc aufweist. Im dargestellten Beispiel haben die Amplituden der Lesespannungen U1fi und U1fo dieselbe Größe. Da die Amplituden der Lesespannungen des Magnetkopfes 13 von der Lage des Kopfes relativ zur Testspur 14 abhängig sind, zeigt dieselbe Amplitudengröße der Lesespannungen U1fi und U1fo, daß

a) die Kopf- und Platteneinstellung (Justage) in Ordnung ist

b) die Lage der Testplatte auf der Antriebseinheit absolut zentrisch ist

c) die Form der Platte bzw. der FlexyDisk akkurat kreisförmig ist

d) der Antrieb der Antriebseinheit genau zentrisch ist

e) der Magnetkopf in Ordnung ist.

Wenn zwischen U1fi und U1fo eine Amplitudendifferenz auftritt, ist bei positiver Differenz die Testplatte 15 nach innen zur Achse verschoben und bei negativer Differenz eine Verschiebung entgegengesetzt dazu also nach außen.

Nach der folgenden Formel ist die Spurverschiebung $\Delta_s$ aus ihrer Sollage durch die Beziehung gegeben

$$\Delta_s = \frac{U1fi - U1fo}{U1fi + U1fo} \cdot \frac{s}{2}$$

worin die Spurverschiebung (track displacement) $\Delta_s$ in $\mu$ und s die Spurbreite des Lesekopfes in $\mu$ ist. Durch Kopfnachstellung auf der Spindel 12 ist es möglich, solche Spur-Kopfjustage-Fehler mit großer Genauigkeit zu korrigieren oder zumindest auszugleichen. Ein solcher Ausgleich ist vorteilhaft dadurch möglich, daß man die Amplitudendifferenz der Lesespannungen der Markierungsgruppe n (bei n aus I bis VI) und der Spannungen der Markierungsgruppe n + 3 durch Kopfnachstellung gleichgroß einstellt. Damit ist die radiale Exzentrizität mindestens minimalisierbar. Bei diesem Exzentrizitätsausgleichsbeispiel ist die Zahl von 6 Markierungsgruppen vorausgesetzt. Für eine andere Zahl N von Markierungsgruppen ist bei einem Spurabweichungsfehler an der Markierungsgruppe n dieselbe Abweichung an der Markierungsgruppe n + N/2 einzustellen, um den radial gegenüberliegenden Fehler zu verringern.

Die Frequenzen 1f und 2f bieten sich zur Verwendung an, jedoch ist es generell möglich, alle bei den infragekommenden Abtastgeschwindigkeiten bzw. den Markierungssignallängen geeigneten Frequenzen zu verwenden. Die Frequenz 2f der Lesespannungen U2fc kann vorteilhaft für die Azimutheinstellung des Magnetkopfes benutzt werden. Eine bessere Azimutheinstellung ist jedoch durch folgende Maßnahmen gegeben.

In Figur 2 sind z. B. zwischen den L-Pulsen 5 und 8 zwei Azimuth-Pulse (A-Pulse) 6 und 7 für die Azimuthkontrolle des Kopfes H vorgesehen. Diese A-Pulse 6, 7 können in jeder der Gruppen I-VI vorgesehen sein, vorzugsweise sind die A-Pulse, jedoch nur in einer einzigen Spur, z. B. in der Spur 1 einer Testplatte, vorgesehen.

Die Testmarkierungen oder Testsignale, O-Pulse, L-Pulse und A-Pulse, werden im folgenden allgemein als Testsignale TS bezeichnet.

Beschriebene Testplatte 15 kann nun mit einer Vielzahl von Testpuren dieser Art versehen sein im Vergleich mit 37 oder 74 Nutzspuren üblicher FlexyDisks können entweder jede dritte oder jede vierte Nutzspur oder jede zweite und darauffolgende dritte Nutzspur mit den Testsignalen versehen sein. Grundsätzlich kann jedoch eine Zahl von Testspuren vorgesehen sein, die durch die Maximalamplituden der Testsignale, z. B. 2 Nutzspurbreiten und zusätzlich einen geeignet breiten Rasen zu den Nachbartestspuren bestimmbar ist. Für eine breite Anwendung und zur Erhöhung der Testgenauigkeit ist es zweckmäßig, die Maximalanzahl von Testspuren für vorgegebene Verwendungszwecke aufzuzeichnen und zu verwenden.

Eine Kombinations-Testplatte kann auch mit Testspuren abwechselnd in der jeweilig zweiten und der jeweilig darauffolgenden dritten Nutzspur über den gesamten Aufzeichnungsbereich verteilt sein. In dieser Ausführung sind Testspuren z. B. in der zweiten, fünften, siebten (usw.) Nutzspur aufgezeichnet. Beim Testen eines Gerätetyps wird natürlich dann im Abstand von nur jeder zweiten oder nur jeden jeweils dritten Nutzspur abgetastet, je nach dem, ob ein 3-Phasen- oder 4-Phasenschrittmotor im Positioniersystem 11 vorhanden ist.

Die Fehlersignalermittlung erfolgt folgendermaßen :

Der Abtastkopf H, der ein Einzelkopf oder ein Kopf einer Doppelkopfanordnung sein kann, wird auf eine vorbestimmte beliebige Testspur eingestellt und die Testsignale O- und L-Pulse (Orientierungspulse und Lagepulse) werden gelesen. Als Referenz-Spur $S_R$ ist besonders die Nutzspur Nr. 16 oder 32 (bei 48 bzw. 96 tpi FlexyDisks) geeignet, da sie, bezogen auf die Aufzeichnungskapazität der Bereiche zum Außenrand und zum Innenrand, etwa in der Mitte liegt. Die O- und L-Pulse sind vom Kopf H kommend sinusförmig und werden im Leseverstärker mittels Spitzengleichrichters AM in Gleichstrom-Pulse umgesetzt. Die O-Pulse werden über ein Filter F, das auf die 2f-Frequenz anspricht, getrennt und dem Mikroprozessor MP direkt zugeführt und dienen dort zur Synchronisation für die Eliminierung von Drehzahlschwankungen. Die L-Pulse werden über einen A/D-Konverter ebenfalls dem Mikroprozessor zugeführt. Der Mikroprozessor MP bestimmt die Puls-Amplituden, bildet die Mittelwerte, führt Einzelsignale oder Mittelwertsignale den EPROM oder RAM-Speichern zu und dient außerdem zur Steuerung der für die Fehlersignalermittlung notwendigen Laufwerkfunktionen über die Leitung L zur Geräteschnittstelle SS. Am Mikroprozessor MP sind außerdem eine Anzeige- oder Schreibeinheit und/oder eine automatische Kopfeinstelleinheit D sowie eine Eingabeeinheit, z. B. eine Tastatur T, angeschlossen. Die gesamte in der Zeichnung gestrichelt eingerahmte Schaltungsanordnung ist mit 25 bezeichnet.

Nach der L-Puls-Amplitudenermittlung und Synchronisation durch die O-Pulse erfolgt im Mikroprozessor MP zuerst die Mittelwertsbildung der Einzel-L-Pulse (Puls-Mittelwert), dann die Mittelwertsbildung der L-Pulse jeder Gruppe I-VI (Gruppen-Mittelwert), danach die Mittelwertsbildung über die ganze Testspur (Spur-Mittelwert).

Über die momentanen Amplitudenwerte der L-Pulse werden grundsätzlich einmal die Spurabweichung (Trackingfehler TE) und zum anderen der Exzentrizitätsfehler (ES) festgestellt und im RAM-Speicher festgehalten, bevor die Mittelwertsbildung erfolgen kann.

Nach erfolgter Fehlersignalermittlung auf der Referenzspur $S_R$ wird die nächstfolgende Testspur angefahren, z. B. Nutzspur 19, und der Vorgang wiederholt, bis die letzte Testspur, z. B. Nutzspur 35 oder 74, abgetastet ist und die Meßwerte gespeichert bzw. die Mittelwerte aller Testspuren gebildet sind.

(Anm. Unter « Mittelwert » im Sinne dieser Erfindung wird der arithmetrische Mittelwert verstanden.)

Bei 37 Nutzspuren liegen beim 4-Spur-Rhythmus dann (Nr. 16, 20, ..., 36) sechs Spur-Mittelwerte und beim 3-Spur-Rhythmus (Nr. 16, 19, ..., 34, 37) acht Spur-Mittelwerte vor, aus denen der Gesamt-Mittelwert IM gebildet werden kann. Diese Anzahlen gelten für Ein-Richtungs-Tests.

Wie oben noch ausgeführt, können auch die Nutzspuren 2, 5, 7, 10, 12, 15, 17, 20, 22, 25, 27, 30, 32, 35, 37, also die jeweils 2 und jede darauffolgende 3. Spur mit Testsignalen TS versehen sein, so daß dann jeweils 8 bzw. 7 Meßwerte bei 37 Nutzspuren zur Verfügung stehen.

Es ist zusätzlich auch noch möglich, die Testspuren S im Bereich von Nutzspur Nr. 0 bis Nr. 16 abzutasten, um die vollständige Verteilung der Fehlersignale TE, s. die linke S-Kurve in Figur 4, zu erhalten. Der Pfeil A gibt die Richtung an, in der die Testspuren, wie oben beschrieben, angefahren werden, hier z. B. von der Außenspur $S_x$ in Richtung auf die Innenspur $S_i$ über die Referenzspur $S_R$.

Die ausgezogene Kurve S wird also durch die Ermittlung der TE-Signale gebildet. Die danebenliegenden gestrichelten S-Kurven stellen den Bereich der Verteilung der Exzentrizitätswerte (ES) dar.

Nach Erreichen der innersten Testspur $S_1$ in obiger Verfahrensbeschreibung wird die Spuranfahrrichtung von A nach B (siehe Pfeil) umgeschaltet und der Fehlersignalermittlungsvorgang wiederholt sich bis zur äußersten Testspur. Vorzugsweise wird der Gesamt-Mittelwert aus den Fehlersignalen TE und TE' beider Spuranfahrrichtungen gebildet, wodurch vorteilhafterweise auch die Positionierhysterese erfaßt und mit auswertbar wird. Es ergibt sich im Abstand HY die rechte, parallele S-Kurve mit den TE'-Signalen der ausgezogenen S-Kurve und den ES-Verteilungskurven. Bei diesem Zwei-Richtungs-Testverfahren ergibt sich auch die doppelte Anzahl von Abweichungs-Meßwerten.

Auf der Referenzspur $S_R$ kann bei einem Doppelkopflaufwerk auch der Kopfversatz 0 zwischen den Köpfen bestimmt und zur Feststellung des maximalen Fehlersignals $TE_{max}$ benutzt werden.

Der über eine Anfahrrichtung A oder B oder A und B erhaltene Gesamt-Mittelwert läßt sich als Gerade IM (für IST-Mittelwert) darstellen. Der Abstand $\Delta_{TE}$ dieser Gerade vom Spur-Mittelwert der Referenz-Spur $S_R$ entspricht der Differenz des Gesamt-Mittelwerts IM vom Spur-Mittelwert. Um den Abstand $\Delta_{TE}$ muß der Abtastkopf H auf der Referenz-Spur $S_R$ verstellt werden, um die Fehlersignale über den gesamten Aufzeichnungsbereich zu minimieren, d. h. um die Aufzeichnungs- und Wiedergabequalität des Geräts zu optimieren. Zeichnerisch ergibt sich die parallele Gerade ØM. Darauf bezogen wird das positive Maximum (PMX) (unten rechts) erhalten, wobei der Doppelkopfversatz 0 ebenso berücksichtigt wird wie der maximale Exzentrizitätswert E, und das negative Maximum (NMX) ergibt sich links oben, wobei die Summe des maximalen TE-Werts $TE_{max}$ gebildet wird. Die positiven und negativen $TE_{max}$-Werte sind also sehr verschieden groß.

Diese Maximalwerte $TE_{max}$ (pos. + neg.) sowie der Wert $\Delta_{TE}$ und gegebenenfalls der Hysteresewert HY können zur Anzeige an der Stufe D, z. B. einer Sichteinrichtung, kommen und stellen Qualitätswerte für das jeweilig geprüfte Gerät dar. Der Wert $\Delta_{TE}$ dient ferner zur Kopfnachstellung von Hand oder wird über eine automatische Vorrichtung in eine motorische Kopfnachstellung umgesetzt, die dann bei D zur Verfügung steht. Es ist aber auch, ohne eine Kopfnachstellung vorzunehmen, möglich, jeden TE-Wert — bezogen auf den Durchschnitts-Mittelwert ØM für jede Testspur — zu ermitteln und eine entsprechende Korrektur des Schreib- oder Lesesignals auf rechnerischem und elektronischem Wege vorzunehmen, um entweder diese Fehler direkt beim Schreibvorgang oder beim Lesevorgang auszugleichen oder zu minimieren.

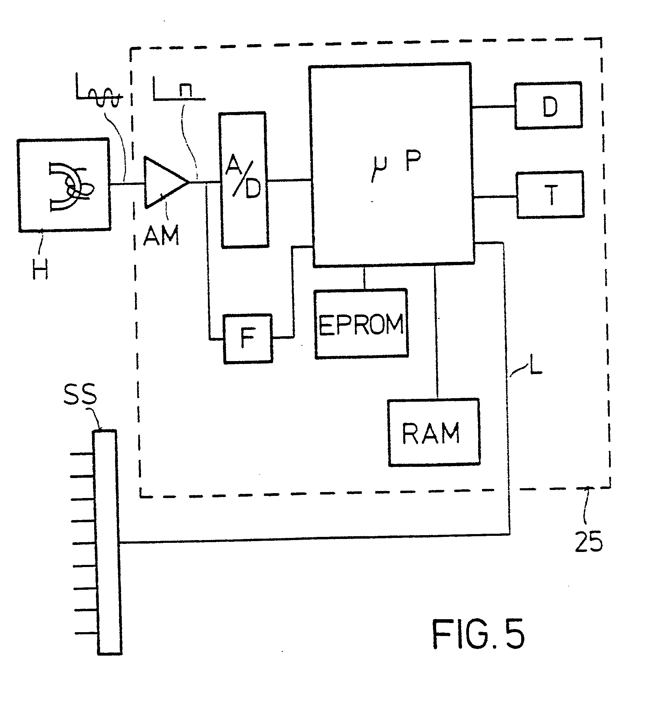

In Figur 5 enthält der löschbare Speicher EPROM die Steuerbefehle zur Ausführung des erfindungsgemäßen Verfahrens, die dadurch einfach geändert werden können. Die Eingabeeinheit T kann als Tastatur ausgebildet sein und dient zum Starten des Meß- oder Einstellvorgangs.

Mit dem erfindungsgemäßen Verfahren und der Anordnung dafür war es in der Praxis möglich, die Kompatibilität der Geräte um ca. 20 % zu erhöhen, den Produktionsausschuß um ca. 15 % zu verringern und die Serviceleistungen auf ein Minimum zu reduzieren.

**Patentansprüche**

1. Verfahren zur Fehlersignalermittlung in einem Magnetplatten-Laufwerk (19) mit einem Schrittmotor-Positioniersystem (11) mittels einer Testmagnetplatte (15), die eine Mehrzahl von Testspuren (5) im nutzbaren Aufzeichnungsbereich der Magnetplatte aufweist, wobei die Testsignale (TS) der Testspuren (S) aus von der Spurmitte (18) abwechselnd nach jeder Seite aufgezeichneten Lagepulsen (1 bis 3) mit gleicher Amplitudengröße und aus die Lagepulse (1 bis 3) in Gruppen (I bis VI) einteilenden Orientierungspulsen (4, 5 und 8, 9) mit im Vergleich zu den Lagepulsen anderer Amplitudengröße bestehen, und wobei die Testsignale (TS) mittels eines Magnetkopfes gelesen und Abweichungen der Lesesignale von ihrer Sollage und Sollamplitude festgestellt werden und wobei Mittelwerte der Abweichungen gebildet werden, dadurch gekennzeichnet, daß eine Vielzahl von Testspuren (S) vorgesehen ist, wobei die Testspuren (TS) in den Nutzspuren entsprechenden radialen Positionen aufgezeichnet sind, wobei die Abstände der Testspuren größer oder gleich dem Abstand zweier Nutzspuren sind, daß die angewendeten Vielfachen des Nutzspurabstandes wenigstens zum Teil nicht mit der Zahl der Motorphasen des Schrittmotors übereinstimmen, daß innerhalb jeder Gruppe (I bis VI) der gelesenen Lageimpulse (1 bis 3) deren Lage und Amplitude bestimmt wird, wobei ein Gruppenmittelwert jeder einzelnen Gruppe und ein Spurmittelwert jeder einzelnen Testspur (S) gebildet wird und daß über die Vielzahl der Testspuren aus den Spurmittelwerten Mittelwerte der Testmagnetplatte gebildet werden, die zur Positionskorrektur des Magnetkopfes auf einer Referenz-Testspur ($S_R$) oder zur direkten Korrektur des Schreib- oder Lesesignals verwendet werden.

2. Verfahren nach Anspruch 1, dadurch gekennzeichnet, daß für Laufwerke mit 3-Phasen- oder 4-Phasen-Schrittmotor-Positioniersystemen (11) die Testspuren (S) einen Abstand von zwei und drei Nutzspurabständen aufweisen.

3. Verfahren nach Anspruch 1, dadurch gekennzeichnet, daß für Laufwerke mit einem 4-Phasen-Schrittmotor-Positioniersystem (11) die Testspuren (S) einen Abstand von drei Nutzspurabständen aufweisen.

4. Verfahren nach Anspruch 1, dadurch gekennzeichnet, daß für Laufwerke mit 3-Phasen-Schrittmotor-Positioniersystem (11) die Testspuren (S) einen Abstand von vier Nutzspurabständen aufweisen.

5. Verfahren nach einem der Ansprüche 1 bis 4, dadurch gekennzeichnet, daß die Testsignale (TS) beginnend mit einer Referenz-Testspur ($S_R$) in der Richtung ansteigender oder abfallender Spurnummern seriell gelesen und verarbeitet werden und anschließend die Testsignale (TS) der Testspuren in Richtung abfallender bzw. ansteigender Spurnummern seriell gelesen und verarbeitet werden, und daß die zwei Richtungs-Mittelwerte zu dem Gesamt-Mittelwert (IM) addiert werden und daß nach dem Ermitteln des Gesamt-Mittelwerts dieser vom Spur-Mittelwert der Referenz-Testspur ($S_R$) subtrahiert und der resultierende Mittelwert zur Kopfpositionskorrektur auf der Referenz-Testspur ($S_R$) oder zur direkten Korrektur des Schreib- oder Lesesignals benutzt wird.

6. Testmagnetplatte für ein Verfahren nach Anspruch 2 mit einer Mehrzahl von Testspuren im nutzbaren Aufzeichnungsbereich der Magnetplatte, wobei die Testsignale aus von der Spurmitte abwechselnd nach jeder Seite aufgezeichneten Lagepulsen 1 bis 3) mit gleicher Amplitudengröße und die Lagepulse in Gruppen (I bis VI) einteilenden Orientierungspulsen (4, 5 und 8, 9) mit anderer Amplitudengröße bestehen, dadurch gekennzeichnet, daß gleichmäßig über den Aufzeichnungsbereich verteilt eine Vielzahl von Testspuren (S) vorgesehen ist mit im wesentlichen denselben Testsignalen (TS), die abwechselnd in radialen Positionen aufgezeichnet sind, die den Positionen von in zwei und drei Nutzspurenabständen vorgesehenen Nutzspuren entsprechen.

7. Testmagnetplatte für ein Verfahren nach Anspruch 3 oder 4, mit einer Mehrzahl von Testspuren im nutzbaren Aufzeichnungsbereich der Magnetplatte, wobei die Testsignale aus von der Spurmitte abwechselnd nach jeder Seite aufgezeichneten Lagepulsen (1 bis 3) mit gleicher Amplitudengröße und die Lagepulse in Gruppen (I bis VI) einteilenden Orientierungspulsen (4, 5 und 8, 9) mit anderer Amplitudengröße bestehen, gekennzeichnet durch eine Vielzahl von Testspuren (S), die im wesentlichen dieselben Testsignale (TS) aufweisen und die in radialen Positionen aufgezeichnet sind, die den Positionen von in drei oder vier Nutzspurabständen vorgesehenen Nutzspuren entsprechen.

8. Anordnung zur Durchführung eines Verfahrens zur Fehlersignalermittlung in einem Magnetplatten-Laufwerk (19) mit einem Schrittmotor-Positioniersystem (11) mittels einer Testmagnetplatte (15), die eine Mehrzahl von Testspuren (5) im nutzbaren Aufzeichnungsbereich der Magnetplatte aufweist, wobei die Testsignale (TS) der Testspuren (S) aus von der Spurmitte (18) abwechselnd nach jeder Seite aufgezeichneten Lagepulsen (1 bis 3) mit gleicher Amplitudengröße und die Lagepulse (1 bis 3) in Gruppen (I bis VI) einteilenden Orientierungspulsen (4, 5 und 8, 9) mit im Vergleich zu den Lagepulsen anderer Amplitudengröße bestehen, und wobei die Testsignale (TS) mittels eines Magnetkopfes gelesen und Abweichungen der Lesesignale von ihrer Sollage und Sollamplitude festgestellt werden und wobei Mittelwerte der Abweichungen gebildet werden, gekennzeichnet durch eine Testmagnetplatte, die mit einer Vielzahl von Testspuren (S) versehen ist, wobei die Testspuren (TS) in den Nutzspuren entsprechenden radialen Positionen aufgezeichnet sind, wobei die Abstände der Testspuren größer oder gleich dem Abstand zweier Nutzspuren sind und wobei die angewendeten Vielfachen des Nutzspurabstandes wenigstens zum Teil nicht mit der Zahl der Motorphasen des Schrittmotors übereinstimmen, und durch einen Magnetkopf, womit die Testsignale gelesen werden und durch eine Schaltungsanordnung, die eine Steuerstufe für die Steuerung des Positioniersystems des Magnetkopfes in einem den Abständen der Testspuren entsprechenden Abstandszyklus enthält und die dem Magnetkopf angeschlossenen eine Auswertstufe, eine Mittelwertbildnerstufe und eine Speicherstufe für die Fehlersignale sowie eine Anzeige- und/oder Schreibstufe für den Gesamt-Mittelwert enthält, womit innerhalb jeder Gruppe (I bis VI) der gelesenen Lageimpulse (1 bis 3) deren Lage und Amplitude bestimmt wird, zur Bildung eines Gruppenmittelwertes jeder einzelnen Gruppe und eines Spurmittelwertes jeder einzelnen Testspur (S) und zur Bestimmung von Mittelwerten der Testmagnetplatte aus den Spurmittelwerten über die Vielzahl der Testspuren, wobei die Mittelwerte der Testmagnetplatte zur Positionskorrektur des Magnetkopfes auf einer Referenz-Testspur ($S_R$) oder zur direkten Korrektur des Schreib- oder Lesesignals gespeichert, angezeigt und/oder geschrieben werden.

9. Anordnung nach Anspruch 8, dadurch gekennzeichnet, daß die Testspuren einen Abstand von zwei und drei Nutzspurabständen aufweisen und der Abtastzyklus der Steuerstufe für das Magnetkopfpositioniersystem ein entsprechender 2-Spur- und 3-Spur-Zyklus ist.

10. Anordnung nach Anspruch 8, dadurch gekennzeichnet, daß die Testspuren der Testmagnetplatte einheitlich entweder drei Nutzspurabstände oder vier Nutzspurabstände aufweisen und der Abtastzyklus der Steuerstufe für das Magnetkopfpositioniersystem ein entsprechender 3-Spur-Zyklus bzw. 4-Spur-Zyklus ist.

11. Anordnung nach Anspruch 8, gekennzeichnet durch eine Steuerstufe, die das Positioniersystem so steuert, daß das Magnetkopfsystem beginnend von der Referenz-Testspur ($S_R$), die Testspuren (S) in der Richtung ansteigender oder abfallender Spurnummern abtastet und anschließend nach Richtungsumkehr die Testspuren (S) in abfallender bzw. ansteigender Spurnummer-Richtung abtastet.

12. Anordnung nach Ansprüchen 8 und 11, gekennzeichnet durch eine Steuerstufe, die nach Feststellen des Gesamt-Mittelwertes (IM) das Magnetkopf-System über das Positioniersystem auf die Referenz-Testspur ($S_R$) steuert und der Spur-Mittelwert mittels der Mittelwertbildnerstufe entweder noch einmal bestimmt oder aus der Speicherstufe entnommen wird und nach anschließender Subtraktion des Gesamt-Mittelwerts vom Spur-Mittelwert der resultierende Mittelwert mittels der Anzeige- oder Schreibstufe angezeigt und/oder zur automatischen Kopfnachstellung oder direkten Schreib- oder Lesesignal-Korrektur in der Speicherstufe bereitgestellt wird.

# EP 0 162 407 B1

## Claims

1. A method for detecting error signals in a magnetic disk drive (19) which has a step motor positioning system (11) by means of a magnetic test disk (15) which has a plurality of test tracks (S) in the useful recording area of the magnetic disk, the test signals (TS) of the test tracks (S) consisting of adjustment signals (1 to 3) which are recorded alternately on either side of the center line (18) of the track and are of the same amplitude, and of orientation signals (4, 5 and 8, 9) which divide the adjustment signals (1 to 3) into groups (I to VI) and whose amplitude differs from that of the adjustment signals, and the test signals (TS) being read by means of a head and deviations of the read signals from their set-point position and set-point amplitude being determined and mean values of the deviations being formed, wherein a plurality of test tracks (S) is provided, the test tracks (TS) being recorded in radial positions corresponding to the useful tracks, and the pitches of the test tracks being greater than or equal to the pitch of two useful tracks, wherein the multiple of the useful track pitch used at least partially does not correspond to the number of motor phases of the step motor, wherein within each group (I to VI) of the read adjustment signals (1 to 3), their position and amplitude are determined, a group mean value of each individual group and a track mean value of each individual test track (S) being formed, and wherein, over the large number of test tracks, the track mean values are used to calculate mean values of the magnetic test disk, which are used for head position correction on a reference test track ($S_R$) or for the direct correction of the write or read signal.

2. A method as claimed in claim 1, wherein, for drives having a 3-phase or 4-phase step motor positioning system (11), the test tracks (S) have a pitch corresponding to two or three useful track pitches.

3. A method as claimed in claim 1, wherein, for drives having a 4-phase step motor positioning system (11), the test tracks (S) have a pitch corresponding to three useful track pitches.

4. A method as claimed in claim 1, wherein, for drives having a 3-phase step motor positioning system (11), the test tracks (S) have a pitch corresponding to four useful track pitches.

5. A method as claimed in any of claims 1 to 4, wherein the test signals (TS) are read and processed serially, beginning with a reference test track ($S_R$), in the direction of increasing or decreasing test track numbers, after which the test signals (TS) of the test tracks are read and processed serially in the direction of, respectively, decreasing or increasing track numbers, and the mean values from the two directions are summed to give the overall mean value (IM), and the overall mean value determined is subtracted from the track mean value of the reference test track ($S_R$), and the resulting mean value is used for head position correction on the reference test track ($S_R$) or for the direct correction of the write or read signal.

6. A magnetic test disk for a method as claimed in claim 2, having a plurality of test tracks in the useful recording area of the magnetic disk, the test signals consisting of adjustment signals (1 to 3) which are recorded alternately on either side of the center line of the track and have the same amplitude and orientation signals (4, 5 and 8, 9) which divide the adjustment signals into groups (I to VI) and have a different amplitude, wherein a large number of test tracks (S) are distributed uniformly over the recording area and have essentially the same test signals (TS), which are recorded alternately in radial positions which correspond to the positions of useful tracks provided at two and three useful track pitches.

7. A magnetic test disk for a method as claimed in either of claims 3 or 4, having a plurality of test tracks in the useful recording area of the magnetic disk, the test signals consisting of adjustment signals (1 to 3) which are recorded alternately on either side of the center line of the track and have the same amplitude and orientation signals (4, 5 and 8, 9) which divide the adjustment signals into groups (I to VI) and have a different amplitude, which comprises a large number of test tracks (S) which have essentially the same test signals (TS) and are recorded in radial positions which correspond to the positions of useful tracks provided at three or four useful track pitches.

8. An arrangement for carrying out a method for detecting error signals in a magnetic disk drive (19) which has a step motor positioning system (11) by means of a magnetic test disk (15) which has a plurality of test tracks (S) in the useful recording area of the magnetic disk, the test signals (TS) of the test tracks (S) consisting of adjustment signals (1 to 3) which are recorded alternately on either side of the center line (18) of the track and are of the same amplitude, and of orientation signals (4, 5 and 8, 9) which divide the adjustment signals (1 to 3) into groups (I to VI) and whose amplitude differs from that of the adjustment signals, and the test signals (TS) being read by means of a head and deviations of the read signals from their set-point position and set-point amplitude being determined and mean values of the deviations being formed, which comprises a magnetic test disk which is provided with a large number of test tracks (S), the test tracks (TS) being recorded in radial positions corresponding to the useful tracks, the pitches of the test tracks being greater than or equal to the pitch of the two useful tracks and the multiple of the useful track pitch used at least partially not corresponding to the number of the motor phases of the step motor, and a head by means of which the test signals are read and a circuit arrangement which contains a control stage for controlling the head positioning system in a scanning cycle corresponding to the pitches of the test tracks, and which contains, connected to the magnetic head, an evaluation stage, a mean value calculation stage and a storage stage for the error signals, as well as a display and/or write stage for the overall mean value, by means of which, within each group (I to VI) of the read adjustment

8

signals (1 to 3), their position and amplitude are determined for forming a group mean value of each individual group and a track mean value of each individual test track (S) and for determining mean values of the magnetic test disk from the track mean values over the large number of test tracks, the mean values of the magnetic test disk being stored, displayed and/or written for head position correction on a reference test track ($S_R$) or for direct correction of the write or read signal.

9. Arrangement as claimed in claim 8, wherein the test tracks have a pitch corresponding to two and three useful track pitches, and the scanning cycle of the control stage for the head positioning system is a corresponding 2-track and 3-track cycle.

10. An arrangement as claimed in claim 8, wherein the test tracks of the magnetic test disk all have either three useful track pitches or four useful track pitches, and the scanning cycle of the control stage for the head positioning system is a corresponding 3-track cycle or 4-track cycle, respectively.

11. An arrangement as claimed in claim 8, which comprises a control stage which controls the positioning system so that the head system, starting from the reference test track ($S_R$), scans the test tracks (S) in the direction of increasing or decreasing track numbers and, after reversing direction, then scans the test tracks (S) in the direction of, respectively, decreasing or increasing track numbers.

12. An arrangement as claimed in claims 8 and 11, which comprises a control stage which, after determining the overall mean value (IM), guides the head system, via the positioning system, to the reference test track ($S_R$), and the track mean value is either determined once again by means of the mean value calculation stage or is taken from the storage stage and, after subsequent subtraction of the overall mean value from the track mean value, the resulting mean value is displayed by means of the display or write stage and/or is made available, in the storage stage, for automatic head adjustment or direct correction of the write or read signal.

## Revendications

1. Procédé pour l'établissement d'un signal d'erreur dans un mécanisme de disques magnétiques (19) muni d'un système de positionnement à moteur pas-à-pas (11), au moyen d'un disque magnétique d'essai (15) qui possède une pluralité de pistes d'essai (S) dans la zone d'enregistrement utilisable du disque magnétique, les signaux d'essai (TS) des pistes d'essai (S) étant constitués d'impulsions de position (1 à 3) de mêmes amplitudes, enregistrées alternativement de chaque côté de l'axe de piste (18) et d'impulsions d'orientation (4, 5 et 8, 9) d'amplitudes différentes de celles des impulsions de position et séparant celles-ci en groupes (I à IV) et les signaux d'essai (TS) étant lus au moyen d'une tête magnétique et les écarts des signaux de lecture étant déterminés par rapport à leur position et leur amplitude de consigne et les valeurs moyennes des écarts étant formées, caractérisé par le fait qu'il est prévu une pluralité de pistes d'essai (S), les signaux d'essai (TS) étant enregistrés en positions radiales correspondant aux pistes utiles, les écartements entre les pistes d'essai étant supérieurs ou égaux à l'écartement entre deux pistes utiles, les multiples d'écartement entre pistes utiles qui sont appliqués ne concordant pas, au moins en partie, avec le nombre de phases de moteurs pas-à-pas, qu'à l'intérieur de chaque groupe (I à VI) des impulsions de position (1 à 3) lues, on détermine leur position et leur amplitude, en formant une valeur moyenne de groupe de chaque groupe particulier et une valeur moyenne de piste de chaque piste d'essai (S) particulière, et que, sur la pluralité des pistes d'essai, sont formées, à partir des moyennes de piste, des moyennes du disque magnétique d'essai, qui sont utilisées pour la correction de position de la tête magnétique sur une piste d'essai de référence ($S_R$) ou pour la correction directe du signal d'enregistrement ou de lecture.

2. Procédé selon la revendication 1, caractérisé par le fait que pour les mécanismes à système de positionnement (11) par moteur pas-à-pas à 3 ou 4 phases, les pistes d'essai (S) sont écartées de deux et trois écarts entre pistes utiles.

3. Procédé selon la revendication 1, caractérisé par le fait que pour les mécanismes à système de positionnement (11) par moteur pas-à-pas à 4 phases, les pistes d'essai (S) sont écartées de trois écarts entre pistes utiles.

4. Procédé selon la revendication 1, caractérisé par le fait que pour les mécanismes à système de positionnement (11) par moteur pas-à-pas à 3 phases, les pistes d'essai (S) sont écartées de quatre écarts entre pistes utiles.

5. Procédé selon l'une des revendications 1 à 4, caractérisé par le fait que les signaux d'essai (TS) sont lus et traités en série suivant les numéros de pistes croissants ou décroissants en partant d'une piste d'essai de référence (SR), puis les signaux d'essai (TS) des pistes d'essai sont lus et traités en série suivant les numéros de piste décroissants ou croissants et les deux moyennes sont additionnées pour donner la moyenne d'ensemble (IM), et après détermination de cette moyenne d'ensemble celle-ci est soustraite de la moyenne de piste de la piste d'essai de référence ($S_R$) et la moyenne résultante est utilisée pour la correction de position de tête sur la piste d'essai de référence ($S_R$) ou pour la correction directe du signal d'enregistrement ou de lecture.

6. Disque magnétique d'essai pour un procédé selon la revendication 2, muni d'une pluralité de pistes d'essai dans la zone d'enregistrement utilisable du disque magnétique, les signaux d'essai étant constitués d'impulsions de position (1 à 3) de mêmes amplitudes, enregistrées alternativement de chaque côté de l'axe de piste (18) et d'impulsions d'orientation (4, 5 et 8, 9) d'amplitudes différentes de celles des impulsions de position et séparant celles-ci en groupes (I à VI), caractérisé par le fait que, répartie uniformément sur la zone d'enregistrement, est prévue une pluralité de pistes d'essai (S) avec des signaux d'essai (TS) sensiblement les mêmes, qui sont enregistrés alternativement en positions radiales, qui correspondent aux positions de pistes utiles prévues à deux et trois écartements de pistes utiles.

7. Disque magnétique pour un procédé selon les revendications 3 ou 4, muni d'une pluralité de pistes d'essai dans la zone d'enregistrement utilisable du disque magnétique, les signaux d'essai étant constitués d'impulsions de position (1 à 3) de mêmes amplitudes, enregistrées alternativement de chaque côté de l'axe de piste (18) et d'impulsions d'orientation (4, 5 et 8, 9) d'amplitudes différentes de celles des impulsions de position et séparant celles-ci en groupes (I à VI), caractérisé par une pluralité de pistes d'essai (S) qui présentent des signaux d'essai (TS) sensiblement les mêmes et qui sont enregistrés en positions radiales correspondant aux positions des pistes utiles prévues à trois ou quatre écartements de pistes utiles.

8. Agencement pour la mise en œuvre d'un procédé pour l'établissement d'un signal d'erreur dans un mécanisme de disques magnétiques (19) muni d'un système de positionnement à moteur pas-à-pas (11), au moyen d'un disque magnétique d'essai (15) qui possède une pluralité de pistes d'essai (S) dans la zone d'enregistrement utilisable du disque magnétique les signaux d'essai (TS) des pistes d'essai (S) étant constitués d'impulsions de position (1 à 3) de mêmes amplitudes, enregistrées alternativement de chaque côté de l'axe de piste (18) et d'impulsions d'orientation (4, 5 et 8, 9) d'amplitudes différentes de celles des impulsions de position et séparant celles-ci en groupes (I à VI), et les signaux d'essai (TS) étant lus au moyen d'une tête magnétique et les écarts des signaux de lecture étant déterminés par rapport à leur position et leur amplitude de consigne et les valeurs moyennes des écarts étant formées, caractérisé par un disque magnétique d'essai qui est pourvu d'une pluralité de pistes d'essai (S), les signaux d'essai (TS) étant enregistrés en positions radiales correspondant aux pistes utiles, les écartements entre les pistes d'essai étant supérieurs ou égaux à l'écartement entre deux pistes utiles, les multiples d'écartement entre pistes utiles qui sont appliqués ne concordant pas, au moins en partie, avec le nombre de phases de moteur pas-à-pas et par une tête magnétique avec laquelle sont lus les signaux d'essai et par un circuit comportant un étage de commande pour la commande du système de positionnement de la tête magnétique dans un cycle d'écartement correspondant aux écartements entre les pistes d'essai et qui comporte un étage d'interprétation raccordé à la tête magnétique, un étage d'établissement de valeur moyenne et un étage de mémoire pour les signaux d'erreur, ainsi qu'un étage indicateur et/ou d'enregistrement pour la valeur moyenne d'ensemble, grâce à quoi, à l'intérieur de chaque groupe (I à VI) des impulsions de position (1 à 3) sont déterminées leur position et leur amplitude, pour former une moyenne de groupe pour chaque groupe particulier et une moyenne de piste pour chaque piste d'essai (S) particulier, et pour déterminer des valeurs moyennes du disque magnétique d'essai à partir des moyennes de piste, sur la pluralité des pistes d'essai, les moyennes du disque magnétique d'essai étant mémorisées, indiquées et/ou enregistrées pour la correction de position de la tête magnétique sur une piste d'essai de référence (S$_R$) ou pour la correction directe du signal d'enregistrement ou de lecture.

9. Agencement selon la revendication 8, caractérisé par le fait que les pistes d'essai sont à un écartement de deux ou trois écartements de pistes utiles et le cycle d'exploration de l'étage de commande pour le système de positionnement de tête magnétique est un cycle 3 correspondant à piste 2 et piste 3.

10. Agencement selon la revendication 8, caractérisé par le fait que les pistes d'essai du disque magnétique d'essai présentent uniformément soit trois écartements de pistes utiles soit quatre écartements de pistes utiles et le cycle d'exploitation de l'étage de commande pour le système de positionnement de tête magnétique est un cycle correspondant à piste 3 ou piste 4.

11. Agencement selon la revendication 8, caractérisé par un étage de commande qui commande le système de positionnement de manière que le système de tête magnétique explore les pistes d'essai (S) selon les numéros de piste croissants ou décroissants, en commençant par la piste d'essai de référence (S$_R$) puis, après inversion de sens, explore les pistes d'essai (S) suivant les numéros de piste décroissants ou croissants.

12. Agencement selon les revendications 8 et 11, caractérisé par un étage de commande qui, après établissement de la valeur moyenne d'ensemble (IM), commande le système de tête magnétique, par l'intermédiaire du système de positionnement, sur la piste d'essai de référence (S$_R$) et la moyenne de piste, au moyen de l'étage de formation de valeur moyenne, est, soit déterminée encore une fois, soit prélevée de l'étage de mémorisation, et, après soustractions suivantes de la moyenne d'ensemble de la moyenne de piste, la moyenne résultante, est indiquée au moyen de l'étage indicateur ou enregistreur et/ou rendre disponible dans l'étage de mémorisation pour réglage automatique de la tête ou correction directe du signal d'enregistrement ou de lecture.

FIG.1

FIG.2

FIG.3

FIG.4

FIG.5